# EUROPÄISCHE PATENTSCHRIFT

(11) **EP 3 815 853 B1**
(45) Veröffentlichungstag und Bekanntmachung des Hinweises auf die Patenterteilung: **25.12.2024**
(21) Anmeldenummer: 19206568.8
(22) Anmeldetag: 31.10.2019
(51) Int. Cl.: B25J 5/04, B25J 9/02, B28B 13/04

(54) **HANDHABUNGSSYSTEM**
HANDLING SYSTEM
SYSTÈME DE MANIPULATION

(43) Veröffentlichungstag der Anmeldung: 05.05.2021
(73) Patentinhaber: Osterwalder AG, 3250 Lyss (CH)
(72) Erfinder: Junker, Adrian, 3053 Münchenbuchsee (CH); Lutz, Pascal, 3012 Bern (CH)
(74) Vertreter: BOVARD AG

(56) Entgegenhaltungen:
- EP-A1- 3 305 476
- CN-A- 104 209 770
- DE-B3- 102015 116 808

## Beschreibung

Die Erfindung betrifft ein Handhabungssystem für ein Formteil, insbesondere aus einem pressbaren Material, um dieses einer Presseinrichtung zu entnehmen und es zu einem Ablageort zu transferieren und dort abzulegen. Der Ablageort kann insbesondere ein Werkstückträger sein.

### Stand der Technik

Zum Entnehmen und Transferieren von Formteilen aus Presseinrichtungen, insbesondere Pulverpressen, sind Handhabungssysteme bzw. Positioniereinrichtungen bekannt, welche die in der Pulverpresse aus einem im Wesentlichen pulver- und/oder granulatförmigen Material gepressten Formteile, bzw. Grünlinge, entnehmen und ihrer Weiterbearbeitung zuführen. Insbesondere werden die Grünlinge einem anschliessenden Sinterprozess zugeführt, in dem sie unter hoher Temperatur zu einem homogenen dichten Formteil gesintert werden. Die Grünlinge, auch bezeichnet als Presslinge oder Rohlinge, liegen im Allgemeinen nach dem Pressvorgang auf einem Unterwerkzeug bzw. einer unteren Stempelanordnung der Presseinrichtung und werden von dort durch einen Greifer oder ein geeignetes Element des Handhabungssystems aufgenommen und anschliessend zu einem Ablageort transportiert und abgesetzt. Die Grünlinge haben im Allgemeinen mehr oder weniger komplexe und filigrane Formen und zeichnen sich in dieser Phase durch eine geringe Festigkeit aus. Demnach sind Handhabungen wie Greifen bzw. Aufnehmen, Transportieren und Absetzen der Grünlinge möglichst erschütterungsarm präzise durchzuführen, wobei aber auch eine gewisse Dynamik gefordert ist.

Für eine automatische Handhabung von Grünlingen sind Systeme mit Scara-Robotern oder Mehrachs-Armrobotern oder auch mit seriell angeordneten Linearachsen bekannt. Dabei erfolgt die Handhabung mittels mehrerer Bewegungsvorrichtungen, die als Linearachsen und/oder Gelenkarmachsen und/oder als Drehachsen ausgebildet sind, um translatorische und/oder rotatorische Bewegungsabläufe mit möglichst vielen Freiheitsgraden ausführen zu können. Ergänzen sich einzelne Linear-und/oder Gelenkachsen zu einer seriellen Kinematik, wobei sich eine Achse auf eine oder mehrere andere abgestützt, addieren sich die zu bewegenden Massen. Demnach erhöhen sich die Massenträgheit ebenso wie Präzisionsabweichungen und/oder Schwingungen.

Aus DE 100 02 981 ist ein Handhabungssystem für einen in einer Presse hergestellten Grünling aus einem Sinterwerkstoff oder pressbarem Keramikwerkstoff mit einer horizontalen Y-Linearachse bekannt, an welcher eine horizontal angeordnete X-Linearachse verfahrbar angeordnet ist, an dem wiederum ein auch in vertikaler Richtung verfahrbarer Arm mit einem Greifer angeordnet ist. Wie bei anderen Systemen mit seriell angeordneten Linearachsen, bei denen eine erste Linearachse an einer zweiten Linearachse und diese an einer dritten Linearachse angeordnet und mehrere unabhängige Linearantriebe vorgesehen sind, ergeben sich ungünstige Massenverhältnisse, welche sich in einer gewissen Beschleunigungsträgheit bei der Bewegung auch nur einer der Linearachsen auswirkt. Demnach stehen häufig die zu beschleunigenden und abzubremsenden Massen herkömmlicher Handhabungssysteme in völligem Gegensatz zu der Masse der zu transportierenden Formteile. Darüber hinaus ist der benötigte Bauraum eines derartig aufgebauten Handhabungssystems gross, was in mancher räumlich beengten Peripherie von Pulverpressen nachteilig ist. Ferner sind eine gute Zugänglichkeit und auch eine grosse erreichbare Ablagefläche zur präzisen Bestückung beispielsweise von Trägern Anforderungen an ein Handhabungssystem.

Aus EP 3 305 476 ist eine Manipulationsvorrichtung bekannt, wobei an einem Grundkörper eine vertikal sich erstreckende Führung mit zwei Führungsschienen vorgesehen ist. Entlang der Führung sind hintereinander zwei Schlitten unabhängig voneinander verfahrbar, an welchen ein dritter Schlitten derart angeordnet ist, dass bei einer Relativbewegung des ersten und des zweiten Schlittens der dritte Schlitten eine Verfahrbewegung ausführt.

Aus DE 10 2015 116808 ist ein X-Y-Tisch für einen Roboter bekannt. Vorgesehen ist eine Führungsschiene, an welcher hintereinander und unabhängig voneinander Schlitten verfahrbar sind, welche mit einer Tragstruktur derart gekoppelt sind, dass diese eine Bewegung in einer dazu senkrechten Richtung ausführt.

Aus CN 104 209 770 ist ein Arbeitstisch bekannt, an dem eine erste Gleitplatte und eine zweite Gleitplatte entlang einer Führungsschiene verfahrbar sind. Mittels Führungselementen ist eine dritte Gleitplatte an den zwei Gleitplatten derart verbunden, dass diese eine Bewegung in einer anderen Richtung ausführt.

Aufgabe der vorliegenden Erfindung ist es, ein Handhabungssystem für Formteile zu entwickeln, welches eine präzise und hoch dynamische Handhabung, d.h. Aufnehmen, Transportieren und Absetzen, von sensiblen Objekten unterschiedlicher Formgebung ermöglicht, wobei deren Beschädigungen vermieden werden sollen. Ferner sollen das Handhabungssystem mit einer Greif-und/oder Bearbeitungseinheit im Bereich von Presseinrichtungen, z.B. Pulverpressen, mit einem modularen Aufbau für maximale Flexibilität und des Weiteren eine gute Zugänglichkeit und eine grosse überfahrbare Fläche bereitgestellt sein.

Diese Aufgaben werden durch ein Handhabungssystem gemäss Anspruch 1 gelöst. Vorteilhafte Details dieses Handhabungssystems ergeben sich aus den abhängigen Ansprüchen und aus der Beschreibung.

### Zusammenfassung der Erfindung

Nachfolgend soll gemäss dem kartesischen Koordinatensystem unter X-Richtung eine horizontale Richtung verstanden werden, über die Formteile von einem Aufnahmeort zu einem Ablageort linear transportiert werden. Senkrecht dazu erstreckt sich horizontal die Y-Richtung. Die Y-Richtung spannt mit der X-Richtung eine horizontale X-Y-Ebene auf. Als Z-Richtung wird diejenige vertikale Richtung bezeichnet, welche sich senkrecht zur horizontalen X-Y-Ebene erstreckt. Im Allgemeinen wird mit Lineareinheit eine angetriebene Linearachse mit Linearführung und einem entlang der Linearführung translatorisch verfahrbaren Führungsschlitten bezeichnet, bzw. mit Drehachse, beispielsweise C- bzw. D-Achse, ein rotatives Element bezeichnet.

Das erfindungsgemässe Handhabungssystem wird im Folgenden in Bezug auf eine Handhabung von Formteilen, bzw. Grünlingen und in Zusammenhang mit einer Presseinrichtung beschrieben, kann aber auch zum Aufnehmen, Transportieren und Ablegen von anderen Formteilen bzw. Elementen eingesetzt werden und ist demnach nicht nur in Kombination mit Presseinrichtungen einsetzbar.

Dem erfindungsgemässen Handhabungssystem liegt das Prinzip zugrunde, dass durch zwei unabhängige Antriebe und in Wirkverbindung mit Bewegungsübertragungsmitteln beliebige zweiachsige Bewegungen in horizontaler und/oder vertikaler Richtung möglich sind.

Es wird ein Handhabungssystem für Formteile zur Entnahme aus einer Presseinrichtung offenbart, umfassend eine Steuereinheit und ein Linearachsensystem mit einer ersten Linearführung, entlang welcher nur ein erster Führungsschlitten und mit einer dazu parallel angeordneten zweiten Linearführung, entlang welcher nur ein zweiter Führungsschlitten in einer Richtung der ersten Linearführung und der zweiten Linearführung unabhängig voneinander verfahrbar sind und einen an dem ersten Führungsschlitten und dem zweiten Führungsschlitten verschieblich gehaltenen Führungswagen, welcher entlang einer Richtung bewegbar ist, die einen Winkel α mit der Richtung der mindestens einen Linearführung bildet.

In einer Ausführungsform des Handhabungssystems sind der erste Führungsschlitten mit dem Führungswagen mittels erster Führungsmittel und der zweite Führungsschlitten mit dem Führungswagen mittels zweiter Führungsmittel verschieblich verbunden. Hierbei umfassen die Führungsmittel eine lineare Führung und eine darin linear verschiebliche Schiene. Das erste Führungsmittel und das zweite Führungsmittel sind in unterschiedlicher Orientierung relativ zu der Richtung der mindestens einen Linearführung angeordnet.

Die Steuereinheit des erfindungsgemässen Handhabungssystems ist eingerichtet, um Bewegungsabläufe des Handhabungssystems koordiniert zu steuern und kann auch durch eine Steuerung einer assoziierten Presseinrichtung bereitgestellt sein.

In einer bevorzugten Ausführungsform des Handhabungssystems umfasst das Linearachsensystem eine erste Linearachse mit dem ersten Führungsschlitten und eine zweite Linearachse mit dem zweiten Führungsschlitten, welche parallel zueinander angeordnet sind. Beispielsweise als X-Linearachsen, beispielsweise ausgebildet als X-Linearachsen mit X-Linearführungen mit jeweils einem X-Führungsschlitten, wobei die jeweiligen Führungsschlitten unabhängig voneinander in Richtung der Linearführungen, gesteuert von der Steuereinheit, verfahrbar sind. Der an den Führungsschlitten der parallelen Linearachsen verschieblich gehaltene Führungswagen ist in der beschriebenen Ausführungsform in einer X-Z-Ebene angeordnet und in dieser bewegbar.

Die Führungsschlitten sind synchron oder relativ zueinander bewegbar, wobei bei letzterem die Führungsschlitten in Richtung der Linearführungen versetzt zueinander bewegt werden. Bei relativer Bewegung der Führungsschlitten entlang der Richtung der Linearführungen ergibt sich durch eine damit erzeugte Bewegungsüberlagerung eine Positionierung des mit den Führungsschlitten verbundenen Führungswagens sowohl in Richtung der Linearführungen als auch in eine dazu senkrechte Richtung, beispielsweise in X- und Z-Richtung. Insbesondere die Anordnung zweier paralleler unabhängiger Linearachsen in dem Linearachsensystem erweist sich als sehr dynamisch im Hinblick auf die Bewegung des dadurch bewegten Führungswagens und der an diesem aufnehmbaren Elemente, unteranderem durch eine günstige Gewichtsverteilung.

Verschiedene Anordnungen von zwei zueinander parallelen Linearachsen sind denkbar. So können die parallelen Linearachsen anliegend zueinander angeordnet sein, so dass die Führungsschlitten entlang von aussenliegenden Linearführungen verfahrbar sind. Alternativ können die parallelen Linearachsen mit Abstand zueinander angeordnet sein, so dass die Führungsschlitten zwischen den sich gegenüberliegenden innenliegenden Linearführungen verfahrbar sind.

Der Führungswagen ist in dem Handhabungssystem gemäss der Erfindung mit den Führungsschlitten verschieblich verbunden, wobei der mit den Führungsschlitten mit den Linearachsen verfahrbare Führungswagen in einer Ebene beweglich ist, aufgespannt durch die Richtung der Linearführungen, z.B. der X-Richtung und einer dazu senkrecht stehenden Richtung, insbesondere der Z-Richtung, und demnach in der X-Z-Ebene. Der Führungswagen kann beispielsweise rahmenartig mit mindestens einem Seitenträgern und einem Querträger ausgebildet sein, wobei der mindestens eine Seitenträger mit den Führungsschlitten in geeigneter Weise verbunden ist, beispielsweise mittels Führungsmitteln an diesen verschieblich gehalten sind.

Die Führungsmittel sind derart ausgebildet, dass der Führungswagen eine Bewegung in einer Richtung ausführt, welche sich in einem Winkel zu der Richtung erstreckt, die durch die mindestens eine Linearführung vorgegeben ist. Hierfür ist vorgesehen, dass die Führungsmittel mindestens eine lineare Führung umfasst, in welche eine Schiene linear verschieblich geführt ist. Die lineare Führung kann entweder an dem Seitenträger oder an dem jeweiligen Führungsschlitten angeordnet sein. Entsprechend ist dann die darin verschieblich geführte Schiene entweder an den Führungsschlitten oder an dem Seitenträger des Führungswagens vorgesehen.

Für eine Bewegung des Führungswagens in einer Ebene, welche durch die Richtung der mindestens einen Linearführung und eine weitere Richtung aufgespannt wird, beispielsweise die X-Z-Ebene, ist es erforderlich, dass die Führungsmittel zur verschieblichen Verbindung des Führungswagens mit den jeweiligen Führungsschlitten in einer zueinander unterschiedlichen Orientierung angeordnet sind. So kann beispielsweise ein Führungsmittel zur verschieblichen Verbindung eines der Führungsschlitten mit dem mindestens einen Seitenträger in Z-Richtung angeordnet sein und in der Ausführungsform mit der Richtung der X-Linearachse einen Winkel von 90° bilden. Das andere Führungsmittel zur verschieblichen Verbindung des anderen Führungsschlittens mit dem Seitenträger bildet mit der Richtung der X-Linearachse einen Winkel von kleiner 90°, bevorzugt einen Winkel α bildet. In einer bevorzugten Ausführungsform sind die Führungsmittel derart angeordnet, dass sie mit der Richtung der mindestens einen Linearführung einen Winkel gleichen Betrags aber unterschiedlichen Vorzeichens bilden.

In einer Ausführungsform mit einem rahmenartigen Führungswagen, mit zwei Seitenträgern ist für eine bessere Stabilität für die verschiebliche Verbindung von einem der Führungsschlitten und einem der Seitenträger des Führungswagens zwei Führungsmittel vorgesehen, welche zueinander parallel in einem Winkel zur Richtung der Linearführung orientiert sind.

In einer Ausführungsform des Handhabungssystems ist die Steuereinheit eingerichtet, um die Führungsschlitten synchron oder relativ zueinander entlang der Richtung der mindestens einen Linearführung in eine vorbestimmbare Position zu verfahren.

Werden die beiden Führungsschlitten entlang der mindestens einen Linearführung, z.B. entlang der mindestens einen X-Linearachse, synchron verfahren, erfolgt ausschliesslich eine translatorische Bewegung des daran angeordneten Führungswagens in X-Richtung. Dies kann beispielsweise dem linearen Transportweg von einer Entnahmestelle bzw. einem Aufnahmeort des Formteils zu einem Ablageort entsprechen, wobei der Ablageort eine Wiegeeinrichtung oder für nachfolgende Prozesse ein Werkstückträger ist, in dem die Formteile palettiert aufgenommen sind. Das Palettieren erfordert im Allgemeinen mehrere Aufnahme- und Absetzabläufe, wobei das mehrmalige Greifen und Absetzen des in dieser Prozessphase fragilen Formteils mit einer hohen Gefahr der Beschädigung verbunden und demnach präzise auszuführen ist. Dies wird durch die leichte Bauweise des erfindungsgemässen Handhabungssystems und exakte Steuerung der Bewegung eines damit verbindbaren Greifelements erreicht.

Bei einer Relativbewegung der Führungsschlitten entlang der mindestens einen Linearführung, beispielsweise wenn die Führungsschlitten in Richtung der X-Linearachsen nicht synchron sondern versetzt zueinander verfahren werden, wird der mit den Führungsschlitten verschieblich verbundene Führungswagen in vertikaler Richtung für einen Vertikalhub bewegt. Durch die Relativbewegung der Führungsschlitten entlang der Richtung der Linearführung verschiebt sich der Führungswagen relativ zu der Linearführung entlang einer Richtung, welche durch die Orientierung der Führungsmittel der Verbindung zwischen Führungsschlitten und Führungswagen einstellbar ist, so dass der Führungswagen beispielsweise in Z-Richtung verstellbar und positionierbar ist, d.h. einen Vertikalhub ausführt. Massgeblich für den Vertikalhub ist dabei der Winkel α, welcher zwischen der Richtung der Linearführung und der Ausrichtung der Führungsmittel mittels der gewählten Konstruktion einstellbar ist.

Der Führungswagen kann entsprechend den auszuführenden Handhabungen des Handhabungssystems mit weiteren Linearachsen, Drehachsen und/oder Funktionsmitteln modular kombiniert werden. In einer bevorzugten Ausführungsform kann an dem Führungswagen eine C-Achse aufgenommen sein, welche sich in Z-Richtung erstreckt und eingerichtet ist, um noch näher zu beschreibende Funktionselemente drehbar zu halten. Somit kann ein Funktionselement um die Z-Richtung geschwenkt bzw. gedreht werden.

In einer Ausführungsform ist das erfindungsgemässe Handhabungssystem eingerichtet, um Funktionselemente austauschbar aufzunehmen, beispielsweise an der C-Achse, wobei die Funktionselemente selbst unterschiedlichen Typs sein können und unteranderem auch weitere Linearachsen oder Drehachsen umfassen können. Demnach kann eine weitere D-Achse vorgesehen sein, so dass mindestens eines der aufnehmbaren Funktionselemente mittels dieser drehbar ist, so dass beispielsweise die Orientierung eines ergriffenen Formteils veränderbar ist.

In einer Ausführungsform kann das mindestens eine austauschbare Funktionselement als Greifelement ausgebildet sein, um ein Formteil beispielsweise von einer Stempelanordnung einer Pulverpresse aufzunehmen. Geeignete Greifelemente können als Vakuum-, Saug-, Loch- oder Zangengreifer mit Zusatzfunktionen zum Drehen, Wenden oder Kippen ausgebildet sein. Ferner können weitere Funktionselemente vorgesehen sein, welche durch Drehung der C-Achse in eine Arbeitsposition bringbar sind. Beispielsweise kann ein derartiges Funktionselemente als Putzerelement ausgebildet sein, welches eingerichtet ist, um eine Form zur Herstellung des Formteils in der Stempelanordnung der Pulverpresse nach Entnahme des Grünlings bzw. Formteils zu reinigen.

Bevorzugt ist das Handhabungssystem eingerichtet, um ein Formteil aus einer Presseinrichtung an einem Aufnahmeort zu entnehmen, von dem Aufnahmeort zu einem Ablageort zu transportieren und an dem Ablageort positioniert abzusetzen. Dabei kann der Ablageort eine Wiegeeinrichtung sein. Alternativ kann der Ablageort ein Werkstückträger sein. Demnach ist mit dem Handhabungssystem Greifen, Heben, Drehen, Positionieren und Ablegen von Formteilen mit einer hohen Wiederholungs-, Positionier- und Ablaufgenauigkeit möglich, wobei eine grosse Teilevielfalt mit hoher Taktzeit bewegt werden kann.

Die Positionierung der Funktionsmittel bzw. des mindestens einen daran beweglich aufgenommen Funktionselements in Richtung einer Y-Achse erfolgt gemäss einer Ausführungsform des Handhabungssystems aus einer Bewegungsüberlagerung in X-Richtung und Drehung um die C-Achse und/oder D-Achse. Bevorzugt ist die C-Achse eingerichtet, um an einem Entnahmeort beliebig positionierte Formteile oder allgemein Teile aufzunehmen und diese an einem Ablageort in einer geeigneten Position und Anordnung abzulegen. Ferner kann die D-Achse eingerichtet sein, um im Wesentlichen eine durch die C-Achse bedingte veränderte Orientierung des aufgenommenen Formteils zu kompensieren bzw. den Formling in einer bestimmbaren Orientierung und somit präzise in Position, beispielsweise auf einer Trägerpalette, absetzen zu können.

Bevorzugt können Detektionsmittel, bzw. ein Detektionssystem, zur Bestimmung von Positionen vorgesehen sein, welche die Position der Funktionsmittel in der X-Richtung und in der Z-Richtung detektieren, beispielsweise mittels Erfassen der Position in X-Richtung der parallelen Linearachsen und ein Verarbeiten des Signals unter Berücksichtigung des Winkels α. Dies stellt einen Vorteil gegenüber einer indirekten Bestimmung der Position der Führungsschlitten dar, welche im Allgemeinen unpräziser ist.

Gemäss einer Ausführungsform kann das Handhabungssystem Mittel für eine Gewichtskompensation umfassen. In einer bevorzugten Ausführungsform des erfindungsgemässen Handhabungssystems sind pneumatische oder hydraulische Einrichtungen an den Führungsschlitten zur Gewichtskompensation der daran angeordneten Elemente vorgesehen. Entsprechende Mittel können dabei mit unterschiedlicher Orientierung angeordnet sein, beispielsweise parallel zu den Führungsmitteln und/oder parallel zu Linearachsen. Hierbei wird neben dem Gewicht der Führungsschlitten und einem daran angreifenden Lastgewicht auch die Massen von Führungswagen mit Funktionsmitteln und/oder der C-Achse und/oder der D-Achse kompensiert. Demnach werden diese Massen nicht durch die Antriebe der Linearachsen, insbesondere der X-Linearachsen, gehalten. Dies vermeidet, dass diese neben einem dynamischen Antriebsmoment auch ein Dauermoment aufbringen müssen und so im ungünstigen Fall ihre Antriebsleistung drastisch erhöht ist.

Mit dem Aufbau des erfindungsgemässen Handhabungssystems für Formteile, umfassend eine Steuereinheit und ein Linearachsensystem, umfassend mindestens eine Linearführung und zwei Führungsschlitten, welche entlang einer Richtung der mindestens einen Linearführung unabhängig voneinander und auch relativ zueinander verfahrbar sind, können Bewegungen von damit assoziierten Elementen tendenziell dynamischer ausgeführt werden. Der Aufbau des Handhabungssystems beansprucht einen geringen Bauraum und kann durch seine maximale Flexibilität mit weiteren Einrichtungen einfach kombiniert werden. Insbesondere der Einsatz in Zusammenhang mit einer Presseinrichtung zur Entnahme eines Formteils von einer Stempelanordnung erweist sich durch die kompakte Bauweise des Handhabungssystems gemäss der Erfindung als vorteilhaft und bietet darüber hinaus eine gute Zugänglichkeit und Erreichbarkeit einer grossen überfahrbaren Fläche.

Mit dem erfindungsgemässen Handhabungssystem können koordinierte translatorische und/oder rotatorische Bewegungen in den Raumrichtungen der aufgenommenen Funktionselemente von der Steuereinheit gesteuert durchgeführt werden. Dabei bietet das Fehlen einer herkömmlicherweise vorgesehenen Z-Linearachse Vorteile nicht nur hinsichtlich Trägheit sondern auch durch eine vereinfachte Peripherie des Handhabungssystems in Bezug auf Leitungen und Platzbedarf. Insbesondere können Führungsfehler einer Z-Linearachse vermieden werden, welche zusätzlich zu Abweichungen in der X-Richtung und/oder Y-Richtung zu einem Versatz des zu positionierenden Funktionselements führen können.

Zum Antrieb der umfassten Linearachsen und/oder Drehachsen sind unterschiedliche Antriebseinheiten einsetzbar. So sind beispielsweise Riemenachsen für hohe Verfahrgeschwindigkeiten und lange Verfahrwege, Spindelachsen für erhöhte Genauigkeiten und Linearmotorachsen für besondere Anforderungen hinsichtlich Dynamik, Genauigkeit und Gleichlauf bekannt. Der Einsatz von Linearmotoren erlaubt höchste Beschleunigungen, wobei sich bei einem mehrfachen Handling die Taktzeiten reduzieren.

Die Führungsschlitten können durch Laufrollen, Kugelschienenführungen oder Gleitführungen auf einem entsprechend an den Linearachsen ausgebildeten Führungsprofil verfahrbar gehalten sein.

### Kurzbeschreibung der Figuren

Weitere Vorteile und Einzelheiten der vorliegenden Erfindung ergeben sich aus der nachfolgenden Beschreibung verschiedener Ausführungsformen anhand der Figuren. Es zeigen:
Figur 1 eine schematische perspektivische Ansicht eines Handhabungssystems gemäss dem Stand der Technik;
Figur 2 eine schematische perspektivische Ansicht eines erfindungsgemässen Handhabungssystems gemäss einer Ausführungsform Vorderansicht eines erfindungsgemässen Handhabungssystems;
Figur 3 eine schematische perspektivische Ansicht eines erfindungsgemässen Handhabungssystems gemäss einer Ausführungsform;
Figur 4 eine schematische Detaildarstellung des Handhabungssystems gemäss der Ausführungsform der Figur 3 mit teilweise entfernten Elementen.

### Detaillierte Beschreibung der Ausführungsformen der Erfindung

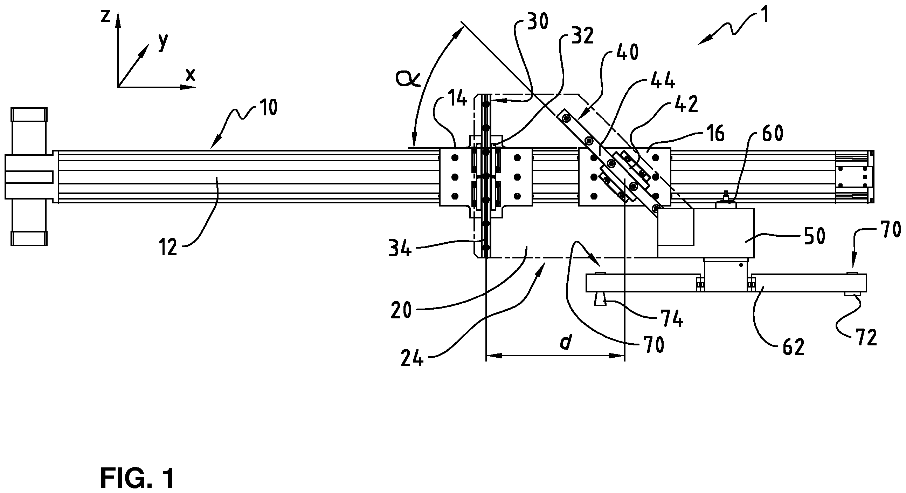

Das in Figur 1 dargestellte Handhabungssystem 1 steht in Zusammenhang mit einer Vorrichtung, vorzugsweise einer Presseinrichtung bzw. einer Pulverpresse zur Herstellung eines Formteils aus einem pulver- und/oder granulatförmigen pressbaren Material mit einer oberen und unteren Stempelanordnung. Das Handhabungssystems 1 umfasst eine Steuereinheit (nicht dargestellt), welche auch diejenige der Pulverpresse sein kann. Mittels der Steuereinheit ist ein Linearachsensystem steuerbar, welches in der ersten Ausführungsform der Fig. 1 eine Linearachse 10 umfasst, welche als X-Linearachse 10 ausgebildet ist und eine in X-Richtung sich erstreckende Linearführung 12 umfasst, an welcher ein erster Führungsschlitten 14 und ein zweiter Führungsschlitten 16 angeordnet sind. Der erste Führungsschlitten 14 und der zweite Führungsschlitten 16 können unabhängig voneinander gesteuert von der Steuereinheit entlang der Linearführung 12 verfahren werden. Demnach können der erste Führungsschlitten 14 und der zweite Führungsschlitten 16 synchron verfahren werden, d.h. mit gleicher Geschwindigkeit und gleichbleibendem Abstand d zueinander. Das Handhabungssystem 1 ist aber auch eingerichtet, dass sich der erste Führungsschlitten 14 und der zweite Führungsschlitten 16 relativ zu einander bewegen bzw. in eine jeweilige Endposition verfahrbar sind, in welcher der Abstand *d* in X-Richtung in einem gewissen Bereich zwischen erstem und zweiten Führungsschlitten 14, 16 einstellbar ist.

An dem ersten Führungsschlitten 14 und dem zweiten Führungsschlitten 16 ist ein Seitenträger 20 mittels erster Führungsmittel 30 und zweiter Führungsmittel 40 verschieblich gehalten. In der dargestellten Ausführungsform der Fig. 1 ist das erste Führungsmittel 30, umfassend eine lineare Führung 32, gehalten an dem ersten Führungsschlitten 14 und eine darin verschieblich aufgenommene Schiene 34, gehalten an dem Seitenträger 20, in einer Z-Richtung angeordnet, wobei die Schiene 34 in dieser Richtung linear bewegbar ist. Das zweite Führungsmittel 40 umfasst eine an dem zweiten Führungsschlitten 16 gehaltene lineare Führung 42 und eine darin geführte Schiene 44, welche in einem Winkel α zur X-Richtung orientiert und an dem Seitenträger 20 gehalten ist.

Der Seitenträger 20 ist ein Element eines Führungswagens 24 und derart gestaltet, dass eine Aufnahme 50 für eine C-Achse 60 vorgesehen ist. Diese C-Achse 60 steht in Wirkverbindung mit einem Verbindungselement 62. An dem Verbindungselement 62 können Funktionselemente 70 austauschbar befestigt werden, welche beispielsweise als Greifelement 72 oder auch als Putzerelement 74 ausgebildet sind und mittels der C-Achse 60 und der Bewegungen des ersten Führungsschlittens 14 und des zweiten Führungsschlittens 16 in eine gewünschte Position gebracht werden können. Sowohl die C-Achse 60 als auch die Funktionselemente 70 können je nach Bedarf des Einsatzes modular mit dem Handhabungssystem 1 kombiniert werden.

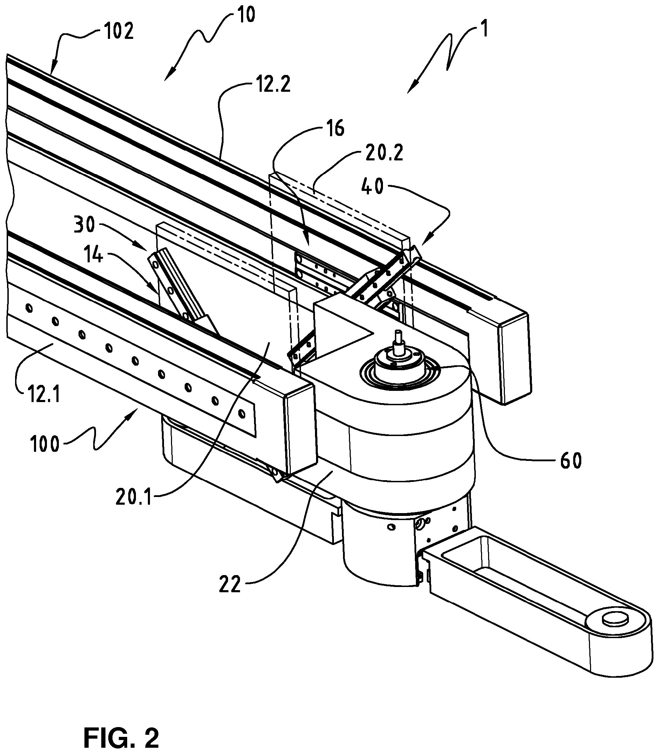

Gemäss der Figur 2 ist ein Ausschnitt einer Ausführungsform des Handhabungssystems 1 dargestellt, bei dem gleiche oder vergleichbare Elemente wie in der ersten Ausführungsform der Fig. 1 mit gleichen Bezugszeichen bezeichnet werden. In der zweiten Ausführungsform umfasst das Linearachsensystem 10 zwei Linearachsen, umfassend eine erste Linearführung 12.1 mit dem ersten Führungsschlitten 14, eine erste X-Linearachse 100 bildend und eine zweite Linearführung 12.2 mit dem zweiten Führungsschlitten 16, eine zweite X-Linearachse 102 bildend. Die beiden X-Linearachsen 100 und 102 sind parallel zueinander in einem Abstand angeordnet, wobei die jeweiligen Führungsschlitten 14, 16 innenliegend in dem sich ergebenden Zwischenraum geführt sind.

An dem ersten Führungsschlitten 14 ist ein erster Seitenträger 20.1 und an dem zweiten Führungsschlitten 16 ist ein zweiter Seitenträger 20.2 mittels der ersten Führungsmittel 30 bzw. der zweiten Führungsmittel 40 verschieblich gehalten. Der erste Seitenträger 20.1 und der zweite Seitenträger 20.2 bilden mit mindestens einem Querträger 22 den rahmenartigen Führungswagen 24 (nicht dargestellt), an welchem weitere Achsen, beispielsweise die C-Achse 60 aufnehmbar sind.

Wie in Fig. 2 dargestellt sind das erste Führungsmittel 30 und das zweite Führungsmittel 40 derart positioniert, dass sie jeweils mit der X-Richtung einen Winkel bilden, welcher beispielsweise den Betrag α aber unterschiedliche Vorzeichen hat. Die jeweiligen Winkel zwischen den ersten und zweiten Führungsmitteln 30, 40 können aber auch mit der X-Richtung jeweils unterschiedliche Winkel bilden.

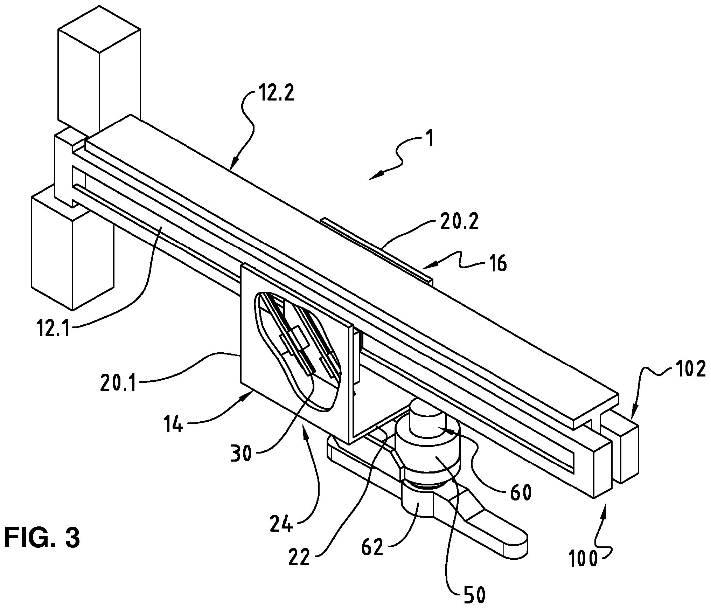

In Figur 3 ist schematisch in Perspektive eine zweite Ausführungsform des Handhabungssystems 1 dargestellt, welches die zwei parallelen X-Linearachsen 100, 102 umfasst. Dargestellt sind auch der erste Führungsschlitten 14 und der zweite Führungsschlitten 16, welche jeweils in der ersten Linearführung 12.1 bzw. in der zweiten Linearführung 12.2 entlang der X-Richtung verfahrbar sind. Demnach sind der erste Führungsschlitten 14 und der zweite Führungsschlitten 16 an Linearführungen 12.1 bzw. 12.2 verschieblich gehalten und mittels Antriebseinheiten, beispielsweise Linearmotoren, die parallel zu den Linearführungen 12.1 und 12.2 liegen oder in diese integriert sind, bewegbar. Der Führungswagen 24 ist mittels der X-Linearachsen 100, 102 verfahrbar.

Der Führungswagen 24 ist als eine Art Rahmen ausgebildet, umfassend die parallel zueinander angeordneten Seitenträger 20.1, 20.2 welche jeweils an dem ersten Führungsschlitten 14 bzw. dem zweiten Führungsschlitten 16 mittels der Führungsmittel 30, 40 verschieblich aufgenommen sind. Der Führungswagen 24 ist demnach in der X-Z-Ebene bewegbar, die den Winkel α mit der X-Richtung bildet.

Die Positionierung der X-Linearachsen 100, 102 kann beispielsweise anhand von Markierungen entlang der Linearführungen 12.1 bzw. 12.2 erfolgen, welche von nicht dargestellten Abtastköpfen abgetastet werden, um die jeweils aktuelle Position der parallelen unabhängigen X-Linearachsen 100, 102 zu ermitteln. Alternativ kann die Positionierung der X-Linearachsen 100, 102 indirekt über die Antriebseinheiten erfolgen. Herkömmliche Positionsregler sind für alle beweglichen Achsen, d.h. Linearachsen und Drehachsen, einsetzbar, um eine jeweilige vorbestimmbare Sollposition anzusteuern, so dass ein damit verbundenes Funktionselement positionierbar ist.

An dem Führungswagen 24 sind weitere Linearachsen, Drehachsen oder Funktionsmittel aufnehmbar. Dargestellt ist die C-Achse 60, aufgenommen in der Aufnahme 50 und mittels dem Verbindungselement 62 können weitere Funktionselemente austauschbar ergänzt werden, welche mittels der C-Achse 60 drehend um die Z-Richtung bewegt werden. Abweichungen von einer vorgegebenen Bewegung eines der Funktionselemente korrigiert werden, wobei translatorische und rotatorische Freiheitsgrade mittels geeigneter Messsysteme in Bezug auf ein geeignetes Bezugssystem bestimmt werden.

Der Funktionswagen 24 bewegt sich im Wesentlichen entlang der X-Richtung, ist aber auch aufgrund des erfindungsgemässen Handhabungssystems in Z-Richtung beweglich, ohne das hierfür eine gesonderte Linearachse vorgesehen ist. Durch Relativbewegung der zwei parallelen unabhängigen X-Linearachsen 100, 102, bzw. der daran verschieblich aufgenommenen ersten und zweiten Führungsschlitten 14, 16 wird eine Bewegung der mittels der Führungsmittel 30, 40 (nicht dargestellt) damit verschieblich verbundenen Seitenträger 20.1, 20.2 und damit des Führungswagens 24 entlang einer Richtung erzeugt, welche im Winkel α relativ zur X-Richtung verläuft. Demnach führt der Funktionswagen 24 einen Vertikalhub aus, ohne dass hierfür eine weitere Z-Linearachse erforderlich ist.

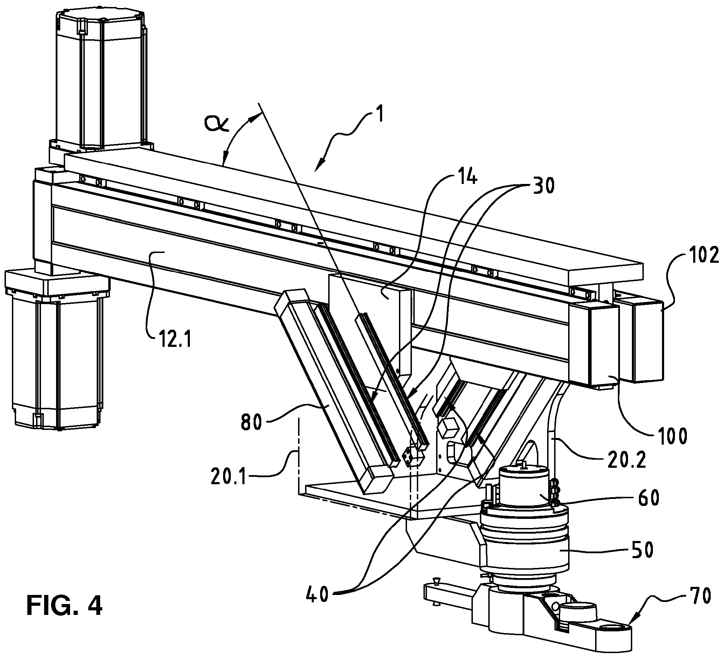

In Figur 4 ist eine perspektivische Ansicht der zweiten Ausführungsform des Handhabungssystems 1 dargestellt, wobei zur besseren Darstellung einige Teile entfernt wurden. Die in Fig. 4 gezeigte Darstellung entspricht weitgehend der Darstellung in Fig. 3, wobei eines der Seitenträger 20, d.h. Seitenträger 20.1, entfernt wurde bzw. nur schemenhaft dargestellt ist, um die Anordnung der Führungsmittel 30, 40 zu zeigen. An jedem der Seitenträger 20.1, 20.2 sind jeweils zwei Führungsmittel 30 bzw. 40 parallel zueinander angeordnet, welche auf jeder Seite gegenüber der X-Richtung den Winkel α, gleichen Betrags aber umgekehrter Vorzeichens bilden. Die Verbindung der ersten und zweiten Führungsschlitten 14, 16 mit den jeweiligen Seitenträgern 20.1, 20.2 mittels zweiter Führungsmittel 30, 40 pro Seite verbessert das Bewegungsverhalten, insbesondere die Steifigkeit und vermeidet Schwingungen. Ferner ist an jedem der Seitenträger 20.1, 20.2 eine Gewichtskompensation 80 vorgesehen, um das auf die Linearachsen 100, 102 wirkende Gewichte zu kompensieren.

## Patentansprüche

1. Handhabungssystem (1) für Formteile zur Entnahme aus einer Presseinrichtung, umfassend:
- eine Steuereinheit,
- ein Linearachsensystem (10) mit einer ersten Linearführung (12.1), entlang welcher nur ein erster Führungsschlitten (14) in Richtung der ersten Linearführung (12.1) und mit einer parallel dazu angeordneten zweiten Linearführung (12.2), entlang welcher nur ein zweiter Führungsschlitten (16) in Richtung der zweiten Linearführung (12.2) unabhängig voneinander verfahrbar sind, und
- einen an dem ersten Führungsschlitten (14) und dem zweiten Führungsschlitten (16) verschieblich gehaltenen Führungswagen (24), welcher entlang einer Richtung bewegbar ist, die einen Winkel α mit der Richtung der Linearführungen (12.1; 12.2) bildet.

2. Handhabungssystem (1) nach Anspruch 1, **dadurch gekennzeichnet, dass** der erste Führungsschlitten (14) mit dem Führungswagen (24) mittels erster Führungsmittel (30) und der zweite Führungsschlitten (16) mit dem Führungswagen (24) mittels zweiter Führungsmittel (40) verschieblich verbunden sind.

3. Handhabungssystem (1) nach Anspruch 2, **dadurch gekennzeichnet, dass** die Führungsmittel (30, 40) eine lineare Führung (32, 42) und eine darin linear verschiebliche Schiene (34, 44) umfassen, und wobei das erste Führungsmittel (30) und das zweite Führungsmittel (40) in unterschiedlicher Orientierung relativ zu der Richtung der mindestens einen Linearführung (12) angeordnet sind.

4. Handhabungssystem (1) nach einem der vorhergehenden Ansprüche, **dadurch gekennzeichnet, dass** das Linearachsensystem (10) eine erste Linearachse (100) mit der ersten Linearführung (12.1) und dem ersten Führungsschlitten (14) und eine zweite Linearachse (102) mit der zweiten Linearführung (12.2) mit dem zweiten Führungsschlitten (16) umfasst, welche als parallel zueinander angeordnete X-Linearachsen (100, 102) ausgebildet sind und wobei der an dem ersten Führungsschlitten (14) und dem zweiten Führungsschlitten (16) verschieblich gehaltene Führungswagen (24) in einer X-Z-Ebene angeordnet ist.

5. Handhabungssystem (1) nach einem der vorhergehenden Ansprüche, **dadurch gekennzeichnet, dass** die Steuereinheit eingerichtet ist, um den ersten Führungsschlitten (14) und den zweiten Führungsschlitten (16) synchron oder relativ zueinander entlang der Richtung der mindestens einen Linearführung (12) in eine vorbestimmbare Position zu verfahren.

6. Handhabungssystem (1) nach Anspruch 5, **dadurch gekennzeichnet, dass** bei einer Relativbewegung des ersten Führungsschlittens (14) und des zweiten Führungsschlittens (16) der an diesen verschieblich gehaltene Führungswagen (24) eine einstellbare Bewegung in einer Richtung ausführt, welche senkrecht zu der Richtung der mindestens einen Linearführung (12) ist.

7. Handhabungssystem (1) nach einem der vorhergehenden Ansprüche, **dadurch gekennzeichnet, dass** der Führungswagen (24) ausgebildet ist, um mit einer Linearachse, einer Drehachse (60) und/oder Funktionsmitteln kombiniert zu werden.

8. Handhabungssystem (1) nach einem der vorhergehenden Ansprüche, **dadurch gekennzeichnet, dass** an dem Führungswagen (24) mindestens ein Funktionselement (70) austauschbar aufgenommen ist.

9. Handhabungssystem (1) nach Anspruch 8, **dadurch gekennzeichnet, dass** das mindestens eine Funktionselement (70) als ein Greifelement (72) für ein Formteil ausgebildet ist.

10. Handhabungssystem (1) nach Anspruch 9, **dadurch gekennzeichnet, dass** das als Greifelement (72) ausgebildete Funktionselement (70) mittels einer D-Achse (60) drehbar ist, so dass die Orientierung eines damit ergriffenen Formteils veränderbar ist.

11. Handhabungssystem (1) nach einem der Ansprüche 8 bis 10, **dadurch gekennzeichnet, dass** das mindestens eine Funktionsmittel (70) ein Putzerelement (74) ist.

12. Handhabungssystem (1) nach einem der vorhergehenden Ansprüche, **dadurch gekennzeichnet, dass** es eingerichtet ist, um ein Formteil aus einer Pulverpresse an einem Aufnahmeort aufzunehmen, von dem Aufnahmeort zu einem Ablageort zu transportieren und an dem Ablageort abzusetzen.

13. Handhabungssystem (1) nach Anspruch 12, **dadurch gekennzeichnet, dass** der Ablageort eine Wiegeeinrichtung ist.

14. Handhabungssystem (1) nach Anspruch 12, **dadurch gekennzeichnet, dass** der Ablageort ein Werkstückträger ist.

15. Handhabungssystem (1) nach einem der vorhergehenden Ansprüche, **dadurch gekennzeichnet, dass** eine Gewichtskompensation (80) an dem ersten Führungsschlitten (14) und/oder dem zweiten Führungsschlitten (16) vorgesehen sind.

## Claims

1. Handling system (1) for removing molded parts from a press device, comprising:
- a control unit,
- a linear axis system (10) with a first linear guide (12.1), along which only a first guide slide (14) is movable in the direction of the first linear guide (12.1), and with a second linear guide (12.2), arranged parallel thereto, along which only a second guide slide (16) is movable in the direction of the second linear guide (12.2), independently of one another, and
- a guide carriage (24) held displaceably on the first guide slide (14) and the second guide slide (16), which guide carriage (24) is movable in a direction forming an angle α with the direction of the linear guides (12.1; 12.2).

2. Handling system (1) according to claim 1, **characterized in that** the first guide slide (14) is displaceably connected to the guide carriage (24) by means of first guide means (30) and the second guide slide (16) is displaceably connected to the guide carriage (24) by means of second guide means (40).

3. Handling system (1) according to claim 2, **characterized in that** the guide means (30, 40) comprise each a linear guidance (32, 42) and each a rail (34, 44) linearly displaceable therein, and whereby the first guide means (30) and the second guide means (40) are arranged in different orientation relative to the direction of the at least one linear guide (12).

4. Handling system (1) according to one of the preceding claims, **characterized in that** the linear axis system (10) comprises a first linear axis (100) with the first linear guide (12.1) and the first guide slide (14) and a second linear axis (102) with the second linear guide (12.2) with the second guide slide (16), which first linear axis (100) and second linear axis (102) are designed as X- linear axes (100, 102) arranged parallel to one another and whereby the guide carriage (24), displaceably held on the first guide slide (14) and the second guide slide (16), is arranged in an X-Z plane.

5. Handling system (1) according to one of the preceding claims, **characterized in that** the control unit is provided to move the first guide slide (14) and the second guide slide (16) synchronously or relative to each other along the direction of the at least one linear guide (12) into a predeterminable position.

6. Handling system (1) according to claim 5, **characterized in that** in the event of a relative movement of the first guide slide (14) and the second guide slide (16), the guide carriage (24), displaceably held on these, executes an adjustable movement in a direction which is perpendicular to the direction of the at least one linear guide (12).

7. Handling system (1) according to one of the preceding claims, **characterized in that** the guide carriage (24) is designed to be combined with a linear axis, a rotary axis (60) and/or functional means.

8. Handling system (1) according to one of the preceding claims, **characterized in that** at least one functional element (70) is exchangeably accommodated on the guide carriage (24).

9. Handling system (1) according to claim 8, **characterized in that** the at least one functional element (70) is designed as a gripping element (72) for a molded part.

10. Handling system (1) according to claim 9, **characterized in that** the functional element (70) designed as a gripping element (72) is rotatable by means of a D-axis (60) so that the orientation of a molded part gripped thereby can be changed.

11. Handling system (1) according to one of the claims 8 to 10, **characterized in that** the at least one functional means <sic. element> (70) is a cleaning element (74).

12. Handling system (1) according to one of the preceding claims, **characterized in that** it is provided to pick up a molded part from a powder press at a pick-up location, to transport it from the pick-up location to a depositing location and to set it down at the depositing location.

13. Handling system (1) according to claim 12, **characterized in that** the depositing location is a weighing facility.

14. Handling system (1) according to claim 12, **characterized in that** the depositing location is a workpiece carrier.

15. Handling system (1) according to one of the preceding claims, **characterized in that** weight compensation (80) is provided on the first guide slide (14) and/or the second guide slide (16).

## Revendications

1. Système de manipulation (1) pour retirer des pièces moulées depuis un dispositif de presse, comprenant :
- une unité de contrôle;
- un système d'axe linéaire (10) muni d'un premier guide linéaire (12.1), le long duquel seulement une première glissière de guidage (14) peut se déplacer dans la direction du premier guide (12.1) et d'un deuxième guide linéaire (12.2), agencé parallèlement à celui-ci, le long duquel seulement une deuxième glissière de guidage (16) peut se déplacer dans la direction du deuxième guide linéaire (12.2), lesdites premier glissière de guidage (14) et deuxième glissière de guidage (16) pouvant se déplacer indépendamment l'une de l'autre;
- un chariot de guidage (24) monté coulissant sur la première glissière de guidage (14) et la deuxième glissière de guidage (16), lequel chariot de guidage (24) étant déplaçable dans une direction formant un angle α avec la direction des guides linéaires (12.1 ; 12.2).

2. Système de manipulation (1) selon la revendication 1, **caractérisé en ce que** la première glissière de guidage (14) est reliée de manière coulissante au chariot de guidage (24) au moyen d'un premier moyen de guidage (30) et la deuxième glissière de guidage (16) est reliée de manière coulissante au chariot de guidage (24) au moyen d'un deuxième moyen de guidage (40).

3. Système de manipulation (1) selon la revendication 2, **caractérisé en ce que** les moyens de guidage (30, 40) comprennent chacun un guidage linéaire (32, 42) et chacun un rail (34, 44) coulissant linéairement, et le premier moyen de guidage (30) et le deuxième moyen de guidage (40) étant agencés selon différentes orientations par rapport à la direction dudit au moins un guide linéaire (12).

4. Système de manipulation (1) selon l'une des revendications précédentes, **caractérisé en ce que** le système d'axe linéaire (10) comprend un premier axe linéaire (100) avec le premier guidage linéaire (12.1) et la première glissière de guidage (14), et un deuxième axe linéaire (102) avec le deuxième guidage linéaire (12.2) avec la deuxième glissière de guidage (16), lesquels premier axe linéaire (100) et deuxième axe linéaire (102) étant conçus comme des axes linéaires X (100, 102) agencés parallèlement l'un à l'autre, et le chariot de guidage (24), monté coulissant sur la première glissière de guidage (14) et la deuxième glissière de guidage (16), étant agencé dans un plan X-Z.

5. Système de manipulation (1) selon l'une des revendications précédentes, **caractérisé en ce que** l'unité de contrôle est fournie pour déplacer la première glissière de guidage (14) et la deuxième glissière de guidage (16) de manière synchronisée ou de manière relative l'une à l'autre le long de la direction dudit au moins un guide linéaire (12) dans une position prédéterminée.

6. Système de manipulation (1) selon la revendication 5, **caractérisé en ce que**, en cas de mouvement relatif de la première glissière de guidage (14) vis-à-vis de la deuxième glissière de guidage (16), le chariot de guidage (24), monté coulissant sur sur celles-ci, exécute un mouvement réglable dans une direction qui est perpendiculaire à la direction dudit au moins un guidage linéaire (12).

7. Système de manipulation (1) selon l'une des revendications précédentes, **caractérisé en ce que** le chariot de guidage (24) est conçu pour être combiné avec un axe linéaire, un axe rotatif (60) et/ou des éléments fonctionnels.

8. Système de manipulation (1) selon l'une des revendications précédentes, **caractérisé en ce qu'**au moins un élément fonctionnel (70) est monté de façon amovible sur le chariot de guidage (24).

9. Système de manipulation (1) selon la revendication 8, **caractérisé en ce qu'**au moins un élément fonctionnel (70) est conçu en tant qu'élément de préhension (72) pour une pièce moulée.

10. Système de manipulation (1) selon la revendication 9, **caractérisé en ce que** l'élément fonctionnel (70), conçu comme élément de préhension, est rotatif au moyen d'un axe-D (60), de telle sorte que l'orientation de la pièce moulée saisie peut être changée.

11. Système de manipulation (1) selon l'une des revendications 8 à 10, **caractérisé en ce qu'**au moins un moyen fonctionnel (70) est un élément de nettoyage (74).

12. Système de manipulation (1) selon l'une des revendications précédentes, **caractérisé en ce qu'**il est prévu pour récupérer une pièce moulée depuis une presse à poudre dans un lieu de ramassage, pour la transporter du lieu de ramassage à un lieu de dépôt.

13. Système de manipulation (1) selon la revendication 12, **caractérisé en ce que** le lieu de dépôt est une installation de pesage.

14. Système de manipulation (1) selon la revendication 12, **caractérisé en ce que** le lieu de dépôt est un porte-pièce.

15. Système de manipulation (1) selon l'une des revendications précédentes, **caractérisée en ce qu'**une compensation de poids (80) est prévue sur la première glissière de guidage (14) et/ou la deuxième glissière de guidage (16).
